# EUROPEAN PATENT SPECIFICATION

(11) **EP 2 373 010 B1**
(45) Date of publication and mention of the grant of the patent: **26.07.2017**
(21) Application number: 11155984.5
(22) Date of filing: 25.02.2011
(51) Int. Cl.: H04N 5/76

(54) **Electronic apparatus and recorded program display method**
Elektronische Vorrichtung und aufgezeichnetes Programmanzeigeverfahren
Appareil électronique et procédé d'affichage de programme enregistré

(30) Priority: 30.03.2010 JP 2010079842
(43) Date of publication of application: 05.10.2011
(73) Proprietor: Kabushiki Kaisha Toshiba, Tokyo (JP); Toshiba Visual Solutions Corporation, Misawa-shi, Aomori 033-0036 (JP)
(72) Inventor: Kuwahara, Kazuki, Tokyo (JP)
(74) Representative: Hoffmann Eitle

(56) References cited:
- WO-A2-2008/027321
- JP-A- 2006 180 058
- US-A1- 2007 154 163
- US-A1- 2009 100 478

## Description

### FIELD

The present invention relates to an electronic apparatus and a recorded program display method.

### BACKGROUND

In recent years, with the spread of digital equipment, such broadcast receiving apparatus as hard disk recorders have become common products. In such broadcast receiving apparatus, reservation recording processing can be performed using an electronic program guide which is supplied from broadcasting stations or servers and various improvements relating to reservation recording have been made.

There is a related art for reservation recording of a program on a next time of a drama series according to program information of a program being broadcast.

There may occur an event that a program series reservation is suspended because another program that is broadcast in the same time slot as a reservation time slot of the program series has been recorded. Recording of the program series can be restarted by making a program series reservation again using recorded programs of the program series as a trigger.

Usually, in broadcast receiver apparatus capable of program series reservation, recorded programs of (a) program series are displayed as groups of series programs corresponding to respective operations of program series reservation. Therefore, when a program series reservation has been made again for a reservation-suspended program series, since two operations have been made, recorded programs and programs to be recorded in the future of the program series concerned are classified into different groups.

However, even if some programs of a program series are not recorded, displaying all programs of the same program series as the same group would enhance the usability. That is, in this case, even when a recorded program that was recorded by making a program series reservation again is replayed, it is not displayed as belonging to another program series. Therefore, a target reproduction program can be retrieved smoothly from a large number of recorded programs.

US 2007/0154163 A1 relates to creating aggregations of episodes of series programming in order. Interactive applications may receive the viewer's indication of interest to record missed episodes of the incomplete series, which may include instructions regarding recording options for including the missed episodes in a series aggregation. Interactive applications may identify the episodes to be included in the series aggregation, and record the missed episodes, which may then be stored and organized to create a series aggregation, in the order that they were first broadcast with episodes that the viewer may already have available. Interactive applications may present the episodes of the series aggregation in the order that they were originally broadcast, by providing the viewer with options on how to access the episodes.

The problem of the invention is solved by the subject matter of the independent claims. Advantageous embodiments are disclosed in the dependent claims.

### BRIEF DESCRIPTION OF THE DRAWINGS

A general configuration that implements the various features of the invention will be described with reference to the drawings. The drawings and the associated descriptions are provided to illustrate embodiments of the invention and not to limit the scope of the invention.
Fig. 1 is an appearance view showing a TV broadcast receiver according to an embodiment
Fig. 2 is an appearance view showing a remote controller which accompanies the TV broadcast receiver according to the embodiment.
Fig. 3 is a functional block diagram showing the TV broadcast receiver according to the embodiment.
Fig. 4 is a reservation management table used in the embodiment.
Fig. 5 is a view showing a first example recorded program list picture used in the embodiment.
Fig. 6 is a view showing a second example recorded program list picture used in the embodiment.
Fig. 7 is a view showing an example of an operation selection picture used in the embodiment.
Fig. 8 is a view showing a third example recorded program list picture used in the embodiment.
Fig. 9 is a flowchart showing a process according to the embodiment which includes program series reservation and recording.

### DETAILED DESCRIPTION OF THE EMBODIMENTS

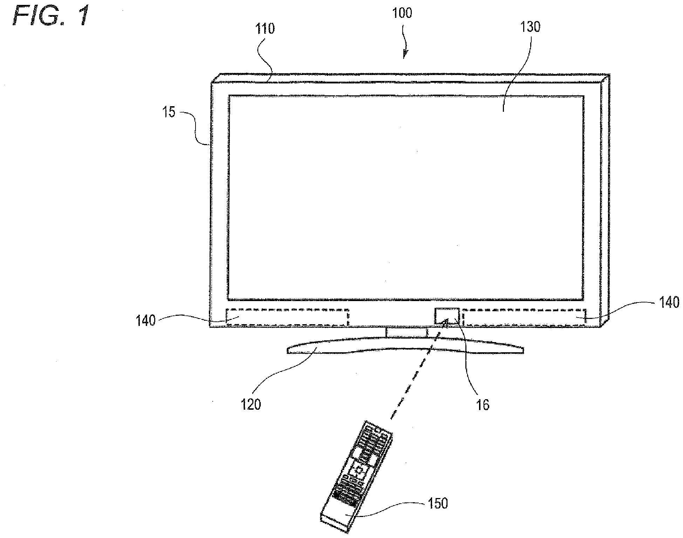

An embodiment of the present invention will be hereinafter described with reference to Figs. 1-9. A TV broadcast receiver 100 will be described as an example electronic apparatus according to the present invention.

Fig. 1 is an appearance view showing the TV broadcast receiver 100 according to the embodiment. Although the embodiment is directed to the TV broadcast receiver 100 which is an example electronic apparatus according to the invention, the invention is not limited to such a case. That is, the invention can be applied to any broadcast receiving apparatus, such as cell phones having a broadcast receiving function, personal computers having a broadcast receiving function, and apparatus incorporating a broadcast receiving apparatus such as video recording apparatus. And the broadcast that relates to the invention is not limited to broadcast using radio waves that travel through the air and includes broadcast of programs that are distributed from a broadcasting station over a network such as a cable, an Internet protocol (IP) network, or the like.

The TV broadcast receiver 100 is mainly composed of a thin cabinet 110 and a support stage 120 which supports the cabinet 110. The cabinet 110 houses electronic devices such as a tuner 3 (described later). A display 130 is occupies most of a front space of the cabinet 110, and speakers 140 are disposed under the display 130 so as to enable stereo sound reproduction. The display 130 is a surface-conduction electron-emitter display (SED) panel, a liquid crystal display (LCD) panel, or the like.

A receiving unit 16 for receiving an operation signal wireless-transmitted from a remote controller 150 is disposed at a bottom-front position in the cabinet 110. A side surface of the cabinet 110 of the TV broadcast receiver 100 is provided with an operation unit 15 having a power switch etc. The TV broadcast receiver 100, which is supplied with external power via a plug (not shown), receives various broadcast-wave signals via an antenna 1 (described later), decodes, for example, one of the received broadcast-wave signals, and outputs a resulting video signal and audio signal. The display 130 processes the video signal and displays video, and the speakers 140 processes the audio signal and outputs a sound.

Although in the embodiment the electronic devices such as the tuner 3 are housed in the cabinet 110, the invention is not limited to such a case. That is, a configuration is possible in which the electronic devices such as the tuner 3 are housed in another cabinet that is separate from the cabinet 110 and the other cabinet is connected to the TV broadcast receiver 100 so that video and a sound are displayed and output from the display 130 and the speakers 140 of the TV broadcast receiver 100.

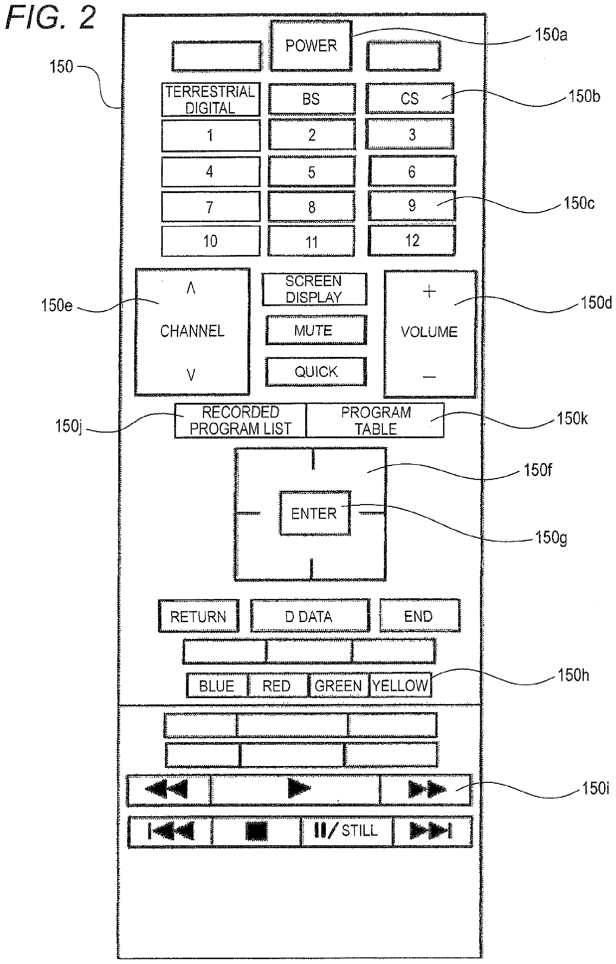

Next, a structure of the remote controller 150 which accompanies the TV broadcast receiver 100 will be described. Fig. 2 is an appearance view showing the remote controller 150 which accompanies the TV broadcast receiver 100 according to the embodiment.

The remote controller 150 is provided with a power key 150a, broadcast switching keys 150b, direct channel selection keys 150c, a volume adjustment key 150d, a channel up/down key 150e, a focus key 150f, an enter key 150g, blue, red, green, and yellow color keys 150h, trick play keys 150i, a recorded program list key 150j, and a program table key 150k.

The power key 150a is a key for giving an instruction to power on or off the TV broadcast receiver 100. The broadcast switching key 150b is a key for giving an instruction to switch the display broadcast of the TV broadcast receiver 100 between the terrestrial digital broadcast, the BS digital broadcast, and the CS digital broadcast. The direct channel selection keys 150c are keys for instructing the TV broadcast receiver 100 to display a program on a channel corresponding to each of those keys. The volume adjustment key 150d is a key for giving an instruction to change the volume of a sound to be output from the speakers 140.

The channel up/down key 150e is a key for giving an instruction to change the display channel of the TV broadcast receiver 100 in order of channel numbers. The focus key 150f is a key for giving an instruction to move the focused item displayed on the display 130. The enter key 150g is a for giving an instruction to decide on an item selected by the focus key 150f.

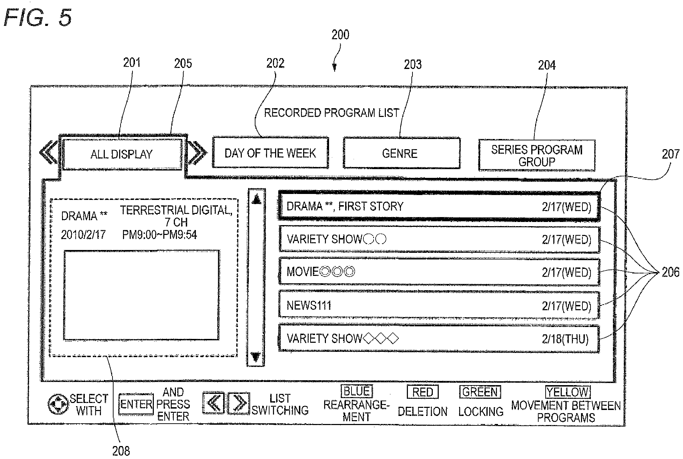

The color keys 150h are keys for giving instructions to cause operations corresponding to operation guides that are assigned to color keys displayed on the screen, respectively. The trick play keys 150i are keys for giving instructions to perform trick plays such as fast feed, rewind, pause, play, next program skip, and preceding program skip. The recorded program list key 150j is a key for displaying a recorded program list picture 200 as shown in Figs. 5-8. The program table key 150k is a key for displaying a program table of one week starting from the present time based on electronic program guide (EPG) information.

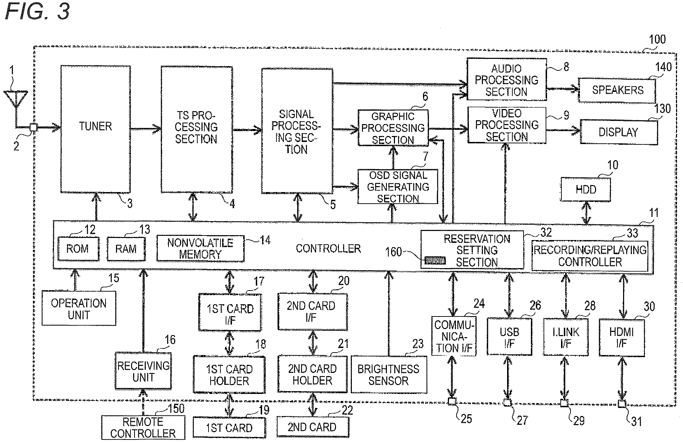

Fig. 3 is a functional block diagram showing the TV broadcast receiver 100 according to the embodiment. Functions of the TV broadcast receiver 100 according to the embodiment will be described below with reference to Fig. 3.

The TV broadcast receiver 100 includes the antenna 1, an input terminal 2, the tuner 3, a transport stream (TS) processing section 4, a signal processing section 5, a graphic processing section 6, an on-screen display (OSD) signal generating section 7, an audio processing section 8, a video processing section 9, a hard disk drive (HDD) 10, a controller 11, an operation unit 15, the receiving unit 16, a first card interface (I/F) 17, a first card holder 18, a second card I/F 20, a second card holder 21, a brightness sensor 23, a communication I/F 24, a LAN terminal 25, a USB I/F 26, a USB terminal 27, an i.LINK I/F 28, an i.LINK terminal 29, an HDMI I/F 30, an HDMI terminal 31, the display 130, and the speakers 140.

The controller 11 is equipped with a read-only memory (ROM) 12, a random access memory (RAM) 13, a nonvolatile memory 14, and a central processing unit (CPU).

The antenna 1 is configured so as to be able to receive signals of such broadcast forms as the terrestrial digital broadcast, the BS digital broadcast, and the CS digital broadcast.

Broadcast signals received by the antennas are input to the tuner 3 via the input terminal 2.

The tuner 3 tunes into a broadcast signal on a desired channel of one of the terrestrial digital broadcast, the BS digital broadcast, and the CS digital broadcast according to a control signal supplied from the controller 11, demodulates the selected broadcast signal (by orthogonal frequency division multiplexing (OFDM)) demodulation in the case of the terrestrial digital broadcast or phase shift keying (PSK) demodulation in the case of the BS digital broadcast or the CS digital broadcast) into a transport stream (TS) containing a desired program, and outputs the broadcast signal to the TS processing section 4. The invention is not limited to the case of using only one tuner 3, and plural tuners (for viewing and recording) may be provided.

The TS processing section 4 decodes the transport stream that is input from the tuner 3 into a digital video signal, audio signal, and data signal, and outputs the signals to the signal processing section 5.

The signal processing section 5 performs prescribed digital signal processing on the digital video signal, audio signal, and data signal. A resulting video signal, audio signal, and data signal are separated from each other. The separated video signal, audio signal, and data signal are output to the graphic processing section 6, the audio processing section 8, and the OSD signal generating section 7, respectively. When supplied from the TS processing section 4 for recording, the digital video signal, audio signal, and data signal are output to the controller 11.

The data signal various kinds of information relating to programs to be broadcast, such as EPG information. The EPG information contains channel information, channel numbers, program names, a schedule, etc. In the embodiment, the EPG information is used for generating a program table of one week starting from the present time and a recorded program list picture 200 of recorded programs.

The graphic processing section 6 decodes the digital video signal that is input from the signal processing section 5. A decoded video signal is combined with (superimposed on) an OSD signal that is input from the OSD signal generating section 7, and a resulting signal is output to the video processing section 9. The graphic processing section 6 can selectively outputs the decoded video signal and the OSD signal to the video processing section 9.

The OSD signal generating section 7 generates, under the control of the controller 11, an OSD signal to be used for displaying a user interface (UI) picture or the like. The data signal that is separated from the digital broadcast signal in the above-described signal processing section 5 is converted by the OSD signal generating section 7 into an OSD signal having a proper format, which is output to the graphic processing section 6.

The audio processing section 8 converts the audio signal that is input from the signal processing section 5 into an analog audio signal having such a format as to be replayable by the speakers 140. The resulting analog audio signal is output to and replayed by the speakers 140.

The video processing section 9 converts the video signal that is input from the graphic processing section 6 into an analog video signal having such a format as to be displayable by the display 130. The resulting analog video signal is output to the display 130.

The HDD 10 records coded digital video signal, audio signal, and data signal under the control of a recording/replaying controller 33. In the embodiment, the coded program data (video signal, audio signal, and data signal) and a reservation ID 161 (described later) are recorded so as to be correlated with each other.

The controller 11 activates a system control program and various processing programs that are stored in the ROM 12 in advance, according to an operation signal that is input from the operation unit 15 or an operation signal that is transmitted from the remote controller 150 and received by the receiving unit 16. The controller 11 controls operations of the individual sections of the apparatus using the RAM 13 as a work memory according to the activated programs using the RAM 13 as a work memory. A reservation setting section 32 and the recording/replaying controller 33, which are functional sections of the controller 11, will be described later.

The ROM 12 is a memory for storing the system control program and the various processing programs to be run by the CPU. The RAM 13 is what is called a work memory in which the CPU is to develop various programs. The nonvolatile memory 14 stores various kinds of setting information, control information, etc. that are necessary for controlling operations of the individual sections.

The operation unit 15 generates an operation signal corresponding to an operation of the user, and outputs it to the controller 11.

The receiving unit 16 receives an operation signal corresponding to an operation that is performed on the remote controller 150 by the user, and outputs it to the controller 11.

The first card holder 18 is connected to the controller 11 via the first card I/F 17. A first card 19 can be inserted into the first card holder 18. The first card 19 is a recording medium such as a secure digital (SD) memory card or a multimedia card (MMC). The first card 19 inserted in the first holder 18 and the controller 11 can exchange information via the first card I/F 17. The controller 11 can store data of an image, music, a broadcast program, etc. into the first card 19. The controller 11 can read data of an image, music, a broadcast program, or the like from the first card 19 and cause the audio processing section 8, the video processing section 9, or the like to decode the read-out data to display the data on the display unit 130 or output the data as a sound from the speakers 140.

The second card holder 21 is connected to the controller 11 via the second card I/F 20. A second card 22 can be inserted into the second card holder 21. The second card 22 is a recording medium for storing, for example, contract information of a broadcast reception contract. The second card 22 inserted in the second holder 21 and the controller 11 can exchange information via the second card I/F 20.

The brightness sensor 23, which is disposed on the front surface of the cabinet 110, detects ambient brightness of the TV broadcast receiver 100, and outputs a detection result to the controller 11. The controller 11 controls the luminance of the display 130 according to the received brightness detection result.

The local area network (LAN) terminal 25 is connected to the controller via the communication I/F 24, and is used as a LAN-compatible HDD-dedicated port of Ethernet (registered trademark). When a LAN-compatible HDD is connected to the LAN terminal 25 as a network attached storage (NAS), the LAN-compatible HDD and the controller 11 can exchange information via the communication I/F 24. In this case, the controller 11 functions as a dynamic host configuration protocol (DHCP) server and controls the LAN-compatible HDD by assigning an Internet protocol (IP) address to the LAN-compatible HDD.

A recording medium such as a hard disc and a DVD (optical disc) can be inserted into an apparatus such as a HDD, a PC, a DVD recorder, or the like that is connected to the controller 11 via the communication I/F 24. The controller 11 can store data of an image, music, a broadcast program, etc. in a recording medium via a hub (and an apparatus connected to the hub). The controller 11 can read data of an image, music, a broadcast program, or the like from a recording medium and has the read-out data replayed to display the data on the display unit 130 or output the data as a sound from the speakers 140.

The universal serial bus (USB) terminal 27 is connected to the controller 11 via the USB I/F 26. The USB terminal 27 is used as a general USB-compatible port. A cell phone, a digital camera, a card reader/write for any of various memory cards, an HDD, a keyboard, etc. are connected to the USB terminal 27 via a hub, for example. The controller 11 can exchange information with a device that is connected to the controller 11 via the USB terminal 27 and the USB I/F 26.

The i.LINK terminal 29 is connected to the controller 11 via the i.LINK I/F 28. For example, an AV-HDD, digital video home system (D-VHS) recorder, etc. are serially connected to the i.LINK terminal 29. The controller 11 can exchange information with each of devices that are connected to the controller 11 via the i.LINK terminal 29 and the i.LINK I/F 28.

The HDMI terminal 31 is connected to the controller 11 via the HDMI I/F 30. A personal computer, a liquid crystal display, an AV amplifier, or the like is connected to the HDMI terminal 31. The controller 11 can exchange information with a device that is connected to the controller 11 via the HDMI terminal 31 and the HDMI I/F 30.

Next, a description will be made of the reservation setting section 32 and the recording/replaying controller 33, which are functional sections of the controller 11. Reservation recording of a program is performed in such a manner that the recording/replaying controller 33 performs recording based on reservation information of the reservation setting section 32.

The reservation setting section 32 reserves recording of a program using one of two reservation methods which are single reservation and program series reservation. The single reservation is a reservation method of selecting a single program from a program table of programs to be broadcast in one week starting from the present time and reserving recording of the selected program. The program series reservation is a reservation method of reserving recording of programs that belong to the same group of series programs as a program (trigger program) that is selected from a program table of programs to be broadcast in one week starting from the present time or a recorded program list picture 200.

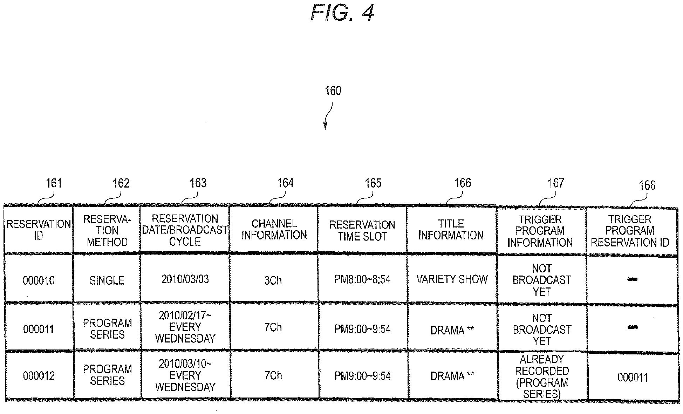

Next, a reserving operation which is performed by the reservation setting section 32 will be described with reference to Fig. 4. Fig. 4 is a view showing a reservation management table 160 used in the embodiment. The reservation management table 160 is managed by the reservation setting section 32.

In the reservation management table 160, a reservation method 162, a reservation date/broadcast cycle 163, channel information 164, a reservation time slot 165, title information 166, trigger program information 167, and a trigger program reservation ID 168 are correlated with each reservation ID 161 and are stored.

The reservation ID 161 is an identifier which is issued arbitrarily by the reservation setting section 32 in response to a reservation operation of the user. The reservation method 162 indicates by which of the single reservation and the program series reservation recording of the program is reserved.

The reservation date/broadcast cycle 163 indicates a broadcast date of the reserved program. In the case of a program series reservation, the reservation date/broadcast cycle 163 indicates a broadcast date and a broadcast cycle of the programs of the group of series programs. The broadcast cycle 163 is determined automatically based on program information that accompanies the selected program, and is "every week," "everyday," "Monday through Saturday," or the like.

For example, the program information that is used for automatic determination of the broadcast cycle 163 is EPG information, pieces of information contained in a broadcast signal of a terrestrial digital broadcast, a BS digital broadcast, or the like such as a title, a channel, a broadcast time, and persons who appear, or like information. The procedure of the automatic determination is as follows. First, programs that are to be broadcast on the same channel as a trigger program in a time slot (of each day) starting from 2 hours 10 minutes before a broadcast start time of the trigger program and ending 2 hours 10 minutes after that are searched for programs whose title is similar to the title of the trigger program. The broadcast cycle 163 is determined to be "every week," "everyday," "Monday through Saturday," or the like based on the broadcast dates of the detected programs.

The channel information 164 indicates a broadcast channel of the reserved program. The reservation time slot 165 indicates a broadcast start time and a broadcast end time of the reserved program. The title information 166 indicates a title of the reserved program.

The trigger program information 167 indicates information of the trigger program of the reservation. The trigger program information 167 is "to be broadcast in the future (not broadcast yet)" and "already recorded." The information "already recorded" is associated with additional information "single reservation" or "program series reservation." The trigger program reservation ID 168 indicates a reservation ID 161 of the reservation of the trigger program in the case where the trigger program is a recorded program.

Next, a program series reserving operation which is performed by the reservation setting section 32 will be described. To make a program series reservation, a program to be broadcast in the future or a recorded program is selected as a trigger program.

First, a description will be made of a case of making a program series reservation using, as a trigger program, a program to be broadcast in the future. Where a program to be broadcast in the future is used as a trigger program, the reservation ID 161, the reservation method 162, and the trigger program information 167 are set to an arbitrary ID, "program series," and "not broadcast yes," respectively. The reservation setting section 32 detects a program of the program series to be broadcast next to the trigger program through an automatic determination which uses program information of the trigger program stored in the HDD 10. The items 163-166 relating to the reservation are set to pieces of information acquired from program information of the detected program.

Next, a description will be made of a case of making a program series reservation using, as a trigger program, a recorded program. When a recorded program is selected as a trigger program, a reservation method 162 of the trigger program is retrieved from the reservation management table 160 using the reservation ID 161 that is stored so as to be correlated with the trigger program. The trigger program information is set to "already recorded (single)" if the reservation method 162 of the trigger program is "single reservation," and set to "already recorded (program series)" if the reservation method 162 of the trigger program is "program series reservation."

First, the case of making a program series reservation using, as a trigger program, a program that was recorded by single reservation will be described. An example situation that a program series reservation is made using, as a trigger program, a program that was recorded by single reservation is such that only one story of a drama series was reserved by single reservation and this drama series is reserved by program series reservation.

Where the trigger program of a program series reservation is a program that was recorded by single reservation, the reservation setting section 32 sets the reservation ID 161, the trigger program information 167, and the items 163-166 to an arbitrarily issued reservation ID, "already recorded (single)," pieces of information detected through an automatic determination, respectively, in such a manner that they are correlated with each other and are stored.

Next, the case of making a program series reservation using, as a trigger program, a program that was recorded by program series reservation will be described. An example situation that a program series reservation is made using, as a trigger program, a program that was recorded by program series reservation is such that a program series reservation was canceled because, for example, an instruction to record another program instead of a program of the program series reservation was given. Even if a program series reservation is canceled, the user may desire to record the remaining programs of the program series. In such a case, a program series reservation would be made using, as a trigger program, a program that was recorded by program series reservation.

Where the trigger program of a program series reservation is a program that was recorded by program series reservation, the reservation setting section 32 sets the reservation ID 161, the trigger program information 167, and the items 163-166 to an arbitrarily issued reservation ID, "already recorded (program series)," pieces of information detected through an automatic determination, respectively, in such a manner that they are correlated with each other and are stored.

The recording/replaying controller 33 performs a recording operation, management of recorded programs, and reproduction of a recorded program. First, the recording operation will be described. Referring to the reservation management table 160 of the reservation setting section 32, the recording/replaying controller 33 performs recording when the start time of a reservation time slot is reached. The recording/replaying controller 33 encodes a digital video signal, audio signal, and data signal supplied from the TS processing section 4 and records resulting coded signals in the HDD 10. Referring to the reservation management table 160, the recording/replaying controller 33 stores the reservation ID of the program in the HDD 10 together with the coded program data (video signal, audio signal, and data signal) of the program.

Next, how the recording/replaying controller 33 manages recorded programs will be described. The recording/replaying controller 33 manages reservation IDs 161 that were recorded together with program data and generates a recorded program list 200 of recorded programs that is to be displayed.

If the recording/replaying controller 33 finds that the trigger program information 167 of a program to be recorded in the reservation management table 160 is "already recorded (program series)" when referring to the trigger program information 167, the recording/reproduction controller 33 reads out the trigger program reservation ID 168. Then, the recording/replaying controller 33 searches the HDD 10 for a program that is recorded so as to be correlated with the trigger program reservation ID 168. That is, the recording/replaying controller 33 searches for a recorded program that belongs to the same program series and was recorded by program series reservation. The recording/replaying controller 33 causes a new reservation ID 161 to overwrite the current reservation ID 161 of the programs that belong to the same group of series programs as the detected program does. As a result of this operation, the same reservation ID is correlated with the group of recorded series programs and the new group of series programs.

When the recorded program list key 150j is pressed, the recording/replaying controller 33 generates a video signal for displaying a recorded program list picture 200 and outputs it to the video processing section 9. The recording/replaying controller 33 generates a recorded program list picture 200 by classifying the groups of series programs based on the reservation IDs 161 that are correlated with the respective program data. That is, the recording/replaying controller 33 displays a recorded program list picture 200 in which programs having the same reservations ID which that is recorded together with program data are shown as belonging to the same group of series programs.

As described above, where a program that was recorded by program series reservation is used as a trigger, the recording/replaying controller 33 updates the reservation ID 161 of a group of series programs that are recorded in the HDD 10. Therefore, the reservation ID 161 of the group of series programs to which the trigger program belongs is made the same as that of the group of series programs to be recorded in the future, and hence the programs belonging to these two groups are displayed as belonging to the same group of series programs in a recorded program list picture 200.

Next, how the recarding/replaying controller 33 replays a recorded program will be described. When instructed to replay a selected program, the recording/replaying controller 33 can decode and replay the coded program data of the selected program that is stored in the HDD 10 and display it on the display 130 or output the program data from the speakers 140 as a sound. Since the LAN terminal 25 is provided as a LAN-compatible HDD-dedicated port, information of a Hi-Vision-quality program can be recorded in the HDD in a stable manner without being affected by other network environments, a network use situation, or the like.

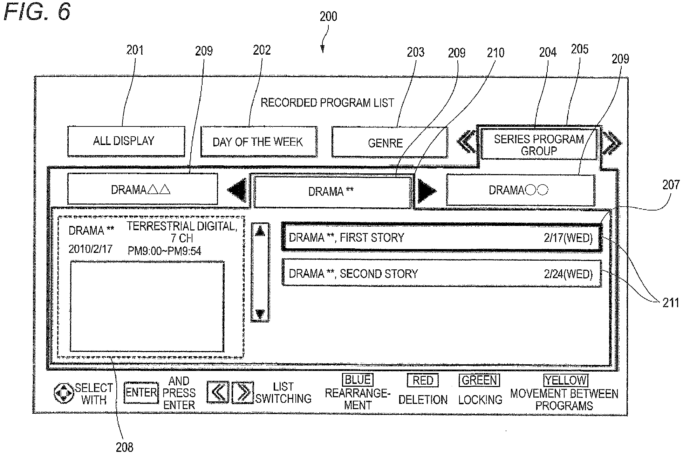

Next, a picture which is used for displaying a list of recorded programs will be described with reference to Figs. 5 and 6. Fig. 5 is a view showing a first example recorded program list picture 200 used in the embodiment, which is displayed by pressing the recorded program list key 150j.

An all display tab 201, a day-of-the-week tab 202, a genre tab 203, a series program group tab 204, program columns 206, and a program details picture 208 are displayed in the recorded program list picture 200.

The all display tab 201 is a tab for selecting display of all the programs stored in the HDD 10. That is, when the all display tab 201 is selected, programs recorded by single reservation and programs recorded by program series reservation are displayed in mixture.

The day-of-the-week tab 202 is a tab for selecting display in which all the recorded programs are sorted by the recording day of the week. That is, when the day-of-the-week tab 202 is selected, programs recorded by single reservation and programs recorded by program series reservation are displayed in mixture for each day of the week.

The genre tab 203 is a tab for selecting display in which all the recorded programs are sorted by genre. Example genres are news, movie, variety show, are drama. That is, when the genre tab 203 is selected, programs recorded by single reservation and programs recorded by program series reservation are displayed in mixture for each genre.

The series program group tab 204 is a tab for selecting display in which all the recorded programs are sorted by the series program group. That is, when the series program group tab 204 is selected, programs recorded by program series reservation are displayed for each group of series programs.

Switching between the displayed tabs 201-204 can be made by pressing the trick play keys 150i. A display form selection cursor 205 is displayed on a selected tab. In the example of Fig. 5, the all display tab 201 is selected.

The program columns 206 are columns in which the respective programs contained in the selected list are displayed. One of the program columns 206 is selected by pressing the focus key 150f. A program column selection cursor 207 is displayed on a selected program column 206. In the example of Fig. 5, a program column 206 of "Drama **, First story" is selected. The details of the program shown in the selected program column 206 are displayed in the program details picture 208.

Fig. 6 is a view showing a second example recorded program list picture 200 used in the embodiment. In the example of Fig. 6, the series program group tab 204 is selected to select the corresponding display form of recorded programs.

When the series program group tab 204 is selected, specific series program group tabs 209 are displayed further. Switching between the specific series program group tabs 209 can also be made by pressing the trick play keys 150i. A series program group selection cursor 210 is displayed on a selected specific series program group tab 209. In the example of Fig. 6, a group "Drama **" is selected.

Series program group program columns 211 are columns in which programs corresponding to a selected specific series program group tab 209 are displayed. In the example of Fig. 6, "Drama **, First story" and "Drama **, Second story" which belong to the same group "Drama **" are displayed and "Drama **, First story" is selected.

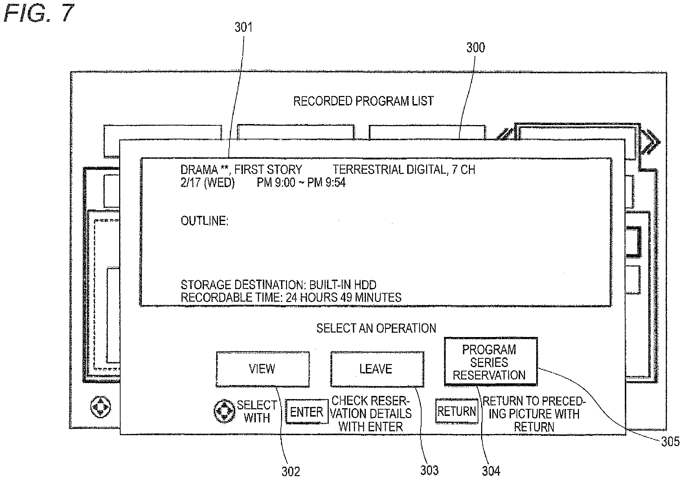

Next, an operation picture that appears when a program is selected from the recorded program list picture 200 will be described with reference to Fig. 7. Fig. 7 is a view showing an example of operation selection picture 300 used in the embodiment.

The operation selection picture 300 is displayed by selecting one program column 206 or one series program group program column 211 by pressing the enter key 150g.

A program details picture 301, a reproduction selection button 302, a dubbing selection button 303, a program series reservation button 304, and an operation selection cursor 305 are displayed in the operation selection picture 300. The program details picture 301 shows the details of the selected program. The reproduction selection button 302 is a button for selecting reproduction of the selected program. The dubbing selection button 303 is a button for dubbing the selected program to another storage medium. The program series reservation button 304 is a button for making a program series reservation using the selected program as a trigger program. Switching between the operation buttons 302-304 is made by pressing the focus key 150f. The operation selection cursor 305 is displayed on a selected operation tab.

A program series reservation is made by selecting the program series reservation button 304 in the operation selection picture 300. That is, the reservation setting section 32 issues a reservation ID 161 and sets the reservation method 162 to "program series reservation" and sets the items 163-166 to respective pieces of reservation information.

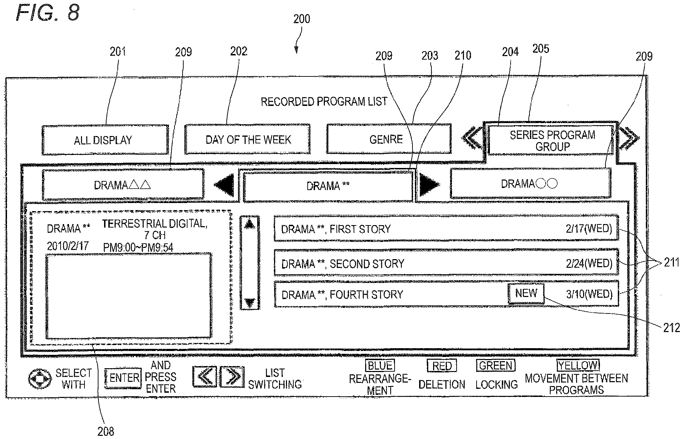

Next, a description will be made of a recorded program list picture 200 for programs that were recorded by a program series reservation that uses, as a trigger program, a program that was recorded by program series reservation. Fig. 8 is a view showing a third example recorded program list picture 200 used in the embodiment. The example recorded program list picture 200 of Fig. 8 is one that appears as a result of execution of program series reservation recording that uses, as a trigger program, "Drama **, First story" which was recorded by program series reservation (see Fig. 6).

A description will be made of a case that a program series reservation has been made using, as a trigger program, "Drama **, First story" which was recorded by program series reservation in a state that "Drama **, First story" and "Drama **, Second story" are already recorded. The present date is March 9th (Tuesday) and "Drama **, First story" and "Drama **, Second story" were broadcast and recorded on February 17th (Wednesday) and February 24th (Wednesday), respectively. "Drama ××, Third story" that was broadcast on March 3rd (Wednesday) was not recorded because another program was recorded (the program series recording was canceled).

When "Drama **, First story" is selected as a trigger program, a reservation ID 161 "000011" that is recorded together with the program data of "Drama **, First story" is read out. A correlated reservation method 162 is read out by searching the reservation management table 160 using the reservation ID 161 "000011." As shown in Fig. 4, the reservation method 162 that is correlated with the reservation ID 161 "000011" is "program series reservation."

The reservation ID 161 that is issued in association with the program series reservation using "Drama **, First story" as a trigger program is assumed to be "000012." The trigger program information 167 and the trigger program reservation ID that correspond to the reservation ID 161 "000012" are "already recorded (program series)" and "000011," respectively.

The reservation setting section 32 performs a program series automatic determination using program information of "Drama **, First story." More specifically, the reservation setting section 32 searches programs that are to be broadcast on the broadcast channel (channel 7) of the trigger program "Drama **, First story" in a time slot (of each day) starting from 2 hours 10 minutes before a broadcast start time (PM 9:00) of the trigger program and ending 2 hours 10 minutes after that among programs to be broadcast from broadcasting stations in one week starting from the present time for a program whose title is similar to the title "Drama **" of the trigger program.

A fact that the broadcast date and time of "Drama **, Fourth story" is March 10th (Wednesday), PM 9:00 to PM 9:54 is detected through the above automatic determination. Pieces of program series reservation information are set as shown in the bottom row of Fig. 4 (reservation ID 161: 000012). More specifically, the reservation method 162, the reservation date/broadcast cycle 163, the channel information 164, the reservation time slot 165, the title information 166, the trigger program information 167, and the trigger program reservation ID 168 are set to "program series reservation," "every Wednesday from March 10th (Wednesday)," "channel 7," "PM 9:00 to PM 9:54," "Drama **," "already recorded (program series)," and "000011," respectively.

If finding that the trigger program information 167 is "already recorded (program series)" in performing reservation recording, the recording/replaying controller 33 reads out the trigger program reservation ID 168 "000011." Then, the recording/replaying controller 33 searches the HDD 10 for a program that is recorded so as to be correlated with the trigger program reservation ID 168 "000011."

Then the recording/replaying controller 33 detects "Drama **, First story" and "Drama **, Second story" that are recorded so as to be correlated with the reservation ID 161 "000011." The recording/replaying controller 33 updates the reservation ID 161 of "Drama **, First story" and "Drama **, Second story" to a new reservation ID "000012."

The recording/replaying controller 33 performs recording in PM 9:00 to PM 9:54 (reservation time slot) of March 10th (reservation date). If the recorded program list key 150j is pressed after completion of the recording, the recording/replaying controller 33 displays a recorded program list picture 200. A new recording mark 212 is displayed in a series program group program column 211 of "Drama **, Fourth story" which has been recorded newly.

All of "Drama **, First story" and "Drama **, Second story" which had already been recorded when a program series reservation was made and "Drama **, Fourth story" which has been recorded newly have the common reservation ID 161 "000012," and hence are displayed under the same series program group tab 209.

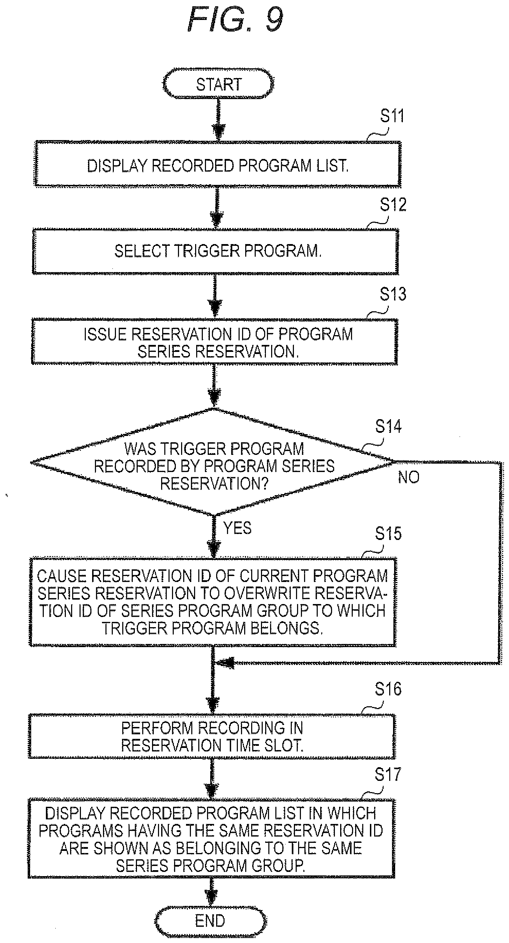

Next, a process in which program series reservation, recording, and display of a recorded program list picture 200 are performed in this order will be described with reference to Fig. 9. Fig. 9 is a flowchart showing a process according to the embodiment which includes program series reservation and recording.

First, at step S11, the recording/replaying controller 33 displays a recorded program list picture 200 in response to an input command. At step S12, the recording/replaying controller 33 selects a trigger program from the recorded program list picture 200 in response to an input command.

At step S13, the reservation setting section 32 issues a reservation ID of a program series reservation. At step S14, the recording/replaying controller 33 determines whether or not the trigger program was recorded by program series reservation. More specifically, the recording/replaying controller 33 reads out a reservation ID 161 that is stored so as to be correlated with program data of the trigger program and searches the reservation management table 160 for a reservation method 162. And the recording/replaying controller 33 determines whether or not the reservation method 162 that is correlated with the reservation ID 161 is "already recorded (program series)."

If it is determined that the trigger program was recorded by program series reservation (S14: yes), at step S15 the recording/replaying controller 33 causes the reservation ID 161 of the current program series reservation to overwrite the reservation ID 161 that is stored so as to be correlated with the recorded programs belonging to the same series program group as the trigger program does. That is, the reservation ID 161 of the series program group to which the trigger program belongs is updated to the new reservation ID 161.

On the other hand, if it is determined that the trigger program was not recorded by program series reservation (S14: no), the process moves to step S16.

At step S16, the recording/replaying controller 33 performs recording when the start time of the reservation time slot 165 is reached which is recognized by referring to the reservation management table 160 of the reservation setting section 32. At step S17, the recording/replaying controller 33 refers to programs that are stored in the HDD 10 so as to be correlated with the reservation ID 161 and displays a recorded program list 200 which shows the programs belonging to the series program group having the reservation ID 161. The process according to the embodiment which includes program series reservation and recording is thus finished.

As described above, according to the embodiment, when a program series reservation is made again using, as a trigger program, a program that was recorded by program series reservation, no separate series program groups are formed. That is, even if a program series reservation is canceled because of, for example, conflicting recording reservations, all programs of the program series concerned can be displayed so as to belong to the same series program group and hence the user operability can be enhanced.

Although in the embodiment each series program group is identified by using a reservation ID 161, it is not limited to such a case. A modification is possible in which the programs recorded in the HDD 10 are searched for programs belonging to the same series program group using program information of a trigger program and the programs thus retrieved are displayed in group.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the invention, which is defined by the appended claims.

## Claims

1. An electronic apparatus (100) comprising:
a tuner configured to receive a broadcast signal,
demodulate the received broadcast signal, and output a resulting program signal;
a recording module (33) configured to record a program;
a reservation setting module (32) configured to manage reservation information (160) for recording the program and to assign arbitrary identification information (161) to the reservation information (160); and
a recording controller (33) configured to correlate the program with the identification information (161) and record the program based on the reservation information (160),
wherein:
the reservation setting module (32) is configured to manage the reservation information (160) based on program information (167) of a trigger program for specifying a program series,
wherein the recording controller (33) is configured to change first identification information (161) which is correlated with a first program of a first set of programs which have been already recorded to second identification information (161) which is correlated with a second program of a second set of programs which are recorded in the future, the first and second set belonging to the program series specified by the trigger program, when the program information of the trigger program indicates that the trigger program was recorded by using a program series reservation method, and
wherein the recording controller (33) is configured to control displaying the first set of programs and the second set of programs as a same group.

2. A recording control method comprising:
receiving a broadcast signal, demodulating the received broadcast signal,
assigning arbitrary identification information (161) to reservation information (160) which is used for recording a program,
recording a program of a program series based on reservation information and program information of a trigger program that specifies the program series; and
correlating a first program of a first set of programs which have been already recorded with first identification information, and correlating a second program of a second set of programs which are recorded in the future, the first and second set belonging to the program series specified by the trigger program, with second identification information,
changing the first identification information which is correlated with the first program to second identification information which is correlated with the second program, when the program information of the trigger program indicates that the trigger program was recorded by using a program series reservation method, and
displaying the first set of programs and the second set of programs as a same group.

## Patentansprüche

1. Elektronische Vorrichtung (100), umfassend:
einen Tuner, der dazu ausgebildet ist, ein Rundsendesignal zu empfangen, das empfangene Rundsendesignal zu demodulieren und ein resultierendes Programmsignal auszugeben;
ein Aufzeichnungsmodul (33), das dazu ausgebildet ist, ein Programm aufzuzeichnen;
ein Reservierungsbestimmungsmodul (32), das dazu ausgebildet ist, eine Reservierungsinformation (160) zum Aufzeichnen des Programms zu verwalten und der Reservierungsinformation (160) eine beliebige Identifikationsinformation (161) zuzuordnen; und
eine Aufzeichnungssteuerung (33), die dazu ausgebildet ist, das Programm mit der Identifikationsinformation (161) zu korrelieren und das Programm basierend auf der Reservierungsinformation (160) aufzuzeichnen,
wobei:
das Reservierungsbestimmungsmodul (32) dazu ausgebildet ist, die Reservierungsinformation (160) basierend auf einer Programminformation (167) eines Auslöseprogramms zum Spezifizieren einer Programmreihe zu verwalten,
wobei die Aufzeichnungssteuerung (33) dazu ausgebildet ist, eine erste Identifikationsinformation (161), die mit einem ersten Programm eines ersten Satzes von Programmen, die bereits aufgezeichnet wurden, korreliert ist, zu einer zweiten Identifikationsinformation (161), die mit einem zweiten Programm eines zweiten Satzes von Programmen, die in der Zukunft aufgezeichnet werden, korreliert ist, zu ändern, wobei der erste und zweite Satz zu der Programmreihe gehören, die durch das Auslöseprogramm spezifiziert wird, wenn die Programminformation des Auslöseprogramms anzeigt, dass das Auslöseprogramm unter Verwendung eines Programmreihenreservierungsverfahrens aufgezeichnet wurde, und
wobei die Aufzeichnungssteuerung (33) dazu ausgebildet ist, ein Anzeigen des ersten Satzes von Programmen und des zweiten Satzes von Programmen als eine gleiche Gruppe zu steuern.

2. Aufzeichnungssteuerverfahren, umfassend:
Empfangen einer Rundsendesignals, Demodulieren des empfangenen Rundsendesignals,
Zuordnen einer beliebigen Identifikationsinformation (161) zu einer Reservierungsinformation (160), die zum Aufzeichnen eines Programms verwendet wird,
Aufzeichnen eines Programmes einer Programmreihe basierend auf einer Reservierungsinformation und einer Programminformation eines Auslöseprogramms, das die Programmreihe spezifiziert; und
Korrelieren eines ersten Programmes eines ersten Satzes von Programmen, die bereits aufgezeichnet wurden, mit einer ersten Identifikationsinformation und Korrelieren eines zweiten Programmes eines zweiten Satzes von Programmen, die in der Zukunft aufgezeichnet werden, wobei der erste und zweite Satz zu der Programmreihe gehören, die durch das Auslöseprogramm spezifiziert wird, mit der zweiten Identifikationsinformation,
Ändern der ersten Identifikationsinformation, die mit dem ersten Programm korreliert ist, zu einer zweiten Identifikationsinformation, die mit dem zweiten Programm korreliert ist, wenn die Programminformation des Auslöseprogramms anzeigt, dass das Auslöseprogramm unter Verwendung eines Programmreihenreservierungsverfahrens aufgezeichnet wurde, und
Anzeigen des ersten Satzes von Programmen und des zweiten Satzes von Programmen als eine gleiche Gruppe.

## Revendications

1. Appareil électronique (100) comprenant :
un tuner configuré pour recevoir un signal de diffusion, démoduler le signal de diffusion reçu, et délivrer en sortie un signal de programme résultant ;
un module d'enregistrement (33) configuré pour enregistrer un programme ;
un module de réglage de réservation (32) configuré pour gérer des informations de réservation (160) pour enregistrer le programme et pour attribuer des informations d'identification arbitraires (161) aux informations de réservation (160) ; et
un dispositif de commande d'enregistrement (33) configuré pour corréler le programme avec les informations d'identification (161) et enregistrer le programme sur la base des informations de réservation (160),
dans lequel
le module de réglage de réservation (32) est configuré pour gérer les informations de réservation (160) sur la base des informations de programme (167) d'un programme de déclenchement permettant de spécifier une série de programmes,
dans lequel
le dispositif de commande d'enregistrement (33) est configuré pour changer des premières informations d'identification (161) qui sont corrélées avec un premier programme d'un premier ensemble de programmes qui ont été déjà enregistrés en des secondes informations d'identification (161) qui sont corrélées avec un second programme d'un second ensemble de programmes qui sont enregistrés dans le futur, les premier et second ensembles appartenant à la série de programmes spécifiée par le programme de déclenchement, lorsque les informations de programme du programme de déclenchement indiquent que le programme de déclenchement a été enregistré en utilisant une méthode de réservation de série de programmes, et
dans lequel le dispositif de commande d'enregistrement (33) est configuré pour commander l'affichage du premier ensemble de programmes et du second ensemble de programmes sous la forme d'un même groupe.

2. Procédé de commande d'enregistrement comprenant :
la réception d'un signal de diffusion, la démodulation du signal de diffusion reçu, l'attribution d'informations d'identification arbitraires (161) à des informations de réservation (160) qui sont utilisées pour enregistrer un programme, l'enregistrement d'un programme d'une série de programmes sur la base d'informations de réservation et d'informations de programme d'un programme de déclenchement qui spécifie la série de programmes ; et
la corrélation d'un premier programme du premier ensemble de programmes qui ont déjà été enregistrés avec des premières informations d'identification, et la corrélation d'un second programme d'un second ensemble de programmes qui sont enregistrés dans le futur, les premier et second ensembles appartenant à la série de programmes spécifiée par le programme de déclenchement, avec des secondes informations d'identification,
la modification des premières informations d'identification qui sont corrélées avec le premier programme en des secondes informations d'identification qui sont corrélées avec le second programme, lorsque les informations de programme du programme de déclenchement indiquent que le programme de déclenchement a été enregistré en utilisant une méthode de réservation de série de programmes, et
l'affichage du premier ensemble de programmes et du second ensemble de programmes sous la forme d'un même groupe.
